# EUROPÄISCHE PATENTSCHRIFT

(11) **EP 2 959 208 B1**
(45) Veröffentlichungstag und Bekanntmachung des Hinweises auf die Patenterteilung: **03.04.2019**
(21) Anmeldenummer: 14700735.5
(22) Anmeldetag: 17.01.2014
(51) Int. Cl.: F17C 5/00

(54) **DRUCKBEHÄLTER MIT WÄRMETAUSCHER FÜR KRYOGEN GESPEICHERTES MEDIUM**
PRESSURE VESSEL COMPRISING A HEAT EXCHANGER FOR A CRYOGENICALLY STORED MEDIUM
RÉSERVOIR SOUS PRESSION MUNI D'UN ÉCHANGEUR DE CHALEUR POUR UN FLUIDE STOCKÉ SOUS FORME CRYOGÉNIQUE

(30) Priorität: 20.02.2013 DE 102013202779
(43) Veröffentlichungstag der Anmeldung: 30.12.2015
(73) Patentinhaber: Bayerische Motoren Werke Aktiengesellschaft, 80809 München (DE)
(72) Erfinder: LANDECK, Bastian, 82008 Unterhaching (DE); SZOUCSEK, Klaus, 85778 Haimhausen (DE)
(86) Internationale Anmeldenummer: PCT/EP2014/050919
(87) Internationale Veröffentlichungsnummer: WO 2014/127935

(56) Entgegenhaltungen:
- EP-A2- 1 722 152
- EP-A2- 1 726 869
- JP-A- 2002 181 295
- US-A1- 2007 246 122
- US-A1- 2008 192 805
- US-A1- 2008 290 645
- US-A1- 2009 114 367

## Beschreibung

Die Erfindung betrifft einen Druckbehälter mit einem Wärmetauscher für ein kryogen gespeichertes Medium, insbesondere zur Verwendung in einem Kraftfahrzeug, insbesondere als Drucktank für Wasserstoff, nach dem Oberbegriff des ersten Anspruchs.

Es ist bereits bekannt, Wasserstoff als Kraftstoff für Kraftfahrzeuge zu verwenden und diesen dazu in einem Drucktank unter Überdruck zu speichern. Derartige Drucktanks können aus Stahl oder aus Leichtmetall bestehen. Für einen höheren Fülldruck kann zum Beispiel ein solcher, im wesentlichen zylindrischer Leichtmetalltank durch einen Faserverbundwerkstoff mit beispielsweise Glas- und/oder Kohlenstofffasern umwickelt werden.

Für die Handhabung kryogen gespeicherten Kraftstoffs ist es von Vorteil, wenn im Druckbehälter ein Wärmetauscher untergebracht ist. Dies beschreibt die WO 2006/133816 A1. Der dort beschriebene Speicherbehälter für kryogen gespeicherten Wasserstoff weist eine Kondensierleitung mit Wärmetauscher auf, die der Zuführung von gasförmigem, kryogenem Medium dient, das im Wärmetausch gegen das gespeicherte kryogene Medium abgekühlt wird. Allerdings ist es auch üblich, in Druckbehältern für kryogen gespeichertes Medium, auch Kryotanks genannt, Wärmetauscher unterzubringen, die nur dazu dienen, im Bedarfsfall durch Wärmeeintrag von außen den Druck des Mediums im Kryotank zu erhöhen, um zum Beispiel eine Entnahme des Mediums zu beschleunigen. Ein solcher Wärmetauscher, der zum Innenraum des Druckbehälters oder Kryotanks keine Öffnung besitzt und nur von außerhalb des Kryotanks mit Wärmetauschermittel versorgt wird, wird meist trotzdem mit dem im Behälter gespeicherten Medium auch als Wärmetauschermittel betrieben, da für kryogene Anwendung nicht viele übliche Wärmetauschermittel geeignet sind und da es deshalb einfacher ist, den bereits vorhandenen, im Druckbehälter bereits kryogen gespeicherten Stoff dann auch als Wärmetauschermittel für kryogene Anwendung zu benutzen.

Ein solcher Wärmetauscher wird in der EP 2 212 614 B1 beschrieben. Dort zeigt die Figur 3A einen internen und einen externen Wärmetauscher, die nacheinander vom gespeicherten oder zu speichernden Medium durchflossen werden, bevor dieses direkt über einen von zwei Einsätzen aus oder in einem(n) Druckbehälter heraus oder hinein gebracht wird.

Bei einer notwendigen Großserienfertigung ist eine möglichst preiswerte Herstellung eines solchen Druckbehälters mit Tankwärmetauscher wichtig und das führt zur Aufgabe der Erfindung, einen Druckbehälter mit Wärmetauscher für kryogen gespeichertes Medium anzugeben, der in kurzer Zeit mit geringen Kosten in konstanter, guter Qualität hergestellt werden kann.

Die Aufgabe wird durch die Merkmale des ersten Anspruchs gelöst. Weitere vorteilhafte Ausbildungen der Erfindung beschreiben die abhängigen Ansprüche.

Nach der Erfindung ist ein Druckbehälter für ein kryogen gespeichertes Medium, bestehend aus einem zylinderförmigen Mantel und aus an dessen Enden angerollten, abgerundeten Stirnseiten mit zentrisch positionierten Öffnungen, die mit eingeschweißten Einsätzen verschlossen sind, wobei wenigstens ein erster Einsatz wenigstens mit Befüll- und Entnahmeeinrichtungen versehen ist und die Einsätze Lager bilden, an denen wenigstens ein Tankwärmetauscher angebracht ist, der aus zwei Rohren besteht, einem Vorlaufrohr und einem Rücklaufrohr, wobei die Befüll- und Entnahmeeinrichtungen aus zwei weiteren Rohren bestehen, einem Befüllrohr und einem Entnahmerohr, die am ersten Einsatz einzeln gelagert und am zweiten Einsatz über eine Verbindungseinrichtung gelagert sind, wobei das Befüllrohr über eine Befüllöffnung im ersten Einsatz von außerhalb des Druckbehälters mit kryogenem Medium beschickt wird und das kryogene Medium im weiteren Verlauf durch das Befüllrohr und von dort über eine zweite Austrittsöffnung im Befüllrohr in den Druckbehälter fließt.

Der erfindungsgemäße Druckbehälter kann so unabhängig vom Tankwärmetauscher hergestellt werden. Dieser wird an den Einsätzen befestigt und mit diesen eingeschweißt, wodurch die Herstellzeit und damit die Herstellkosten erheblich gesenkt werden können und die Herstellqualität bezüglich Dichtigkeit des Wärmetauschers garantiert werden kann. Zusätzlich findet auch während des Befüllvorgangs über das Befüllrohr ein vorteilhafter Wärmetausch zwischen dem Druckbehälterinhalt und dem eingebrachten Medium statt.

Vorteilhafte Ausführungsformen der Erfindung sind dadurch gekennzeichnet, dass der Tankwärmetauscher sich in axialer Richtung vom ersten Einsatz zu einem zweiten Einsatz hin erstreckt. Dies kann vorteilhafterweise so ausgeführt sein, dass der Tankwärmetauscher aus zwei Rohren besteht, einem Vorlaufrohr und einem Rücklaufrohr, die am ersten Einsatz einzeln angebracht und am zweiten Einsatz zusammen über die Verbindungseinrichtung gelagert sind, wobei das Vorlaufrohr über eine Befüllöffnung im ersten Einsatz von außerhalb des Druckbehälters mit kryogenem Medium beschickt werden kann und das kryogene Medium im weiteren Verlauf durch das Vorlaufrohr über die Verbindungseinrichtung in das Rücklaufrohr und von diesem über eine erste Austrittsöffnung in den Druckbehälter fließt oder durch den ersten Einsatz hindurch, über eine Auslauföffnung in diesem, aus dem Druckbehälter heraus geführt wird. Günstigerweise ist dann die erste Austrittsöffnung im Rücklaufrohr, in der Nähe des ersten Einsatzes, oder im ersten Einsatz angebracht, während an die Auslauföffnung außerhalb des Druckbehälters weitere Wärmetauschermittel führende beliebige Einrichtungen angebracht sind. Zur Unterstützung des Wärmetauschvorganges zwischen den Rohren und dem Druckbehälterinhalt ist es vorteilhaft, wenn die Rohre des Tankwärmetauschers wenigstens abschnittsweise außen mit Wärmetauschlamellen versehen sind. Dabei ist es für die Herstellung des Druckbehälters mit Wärmetauscher sehr günstig, wenn der Umfang des gesamten Wärmetauschers kleiner ist, als die Öffnungen im Druckbehälter, die durch die Einsätze verschlossen werden. So kann vor der Montage des Drucktanks bereits ein Einsatz mit dem Tankwärmetauscher verbunden werden. Bei der Montage wird dann dieser Einsatz mit dem Wärmetauscher in den Druckbehälter eingeführt und mit diesem verbunden, während der andere Einsatz nachfolgend, den Druckbehälter verschließend und den Tankwärmetauscher aufnehmend mit dem Druckbehälter verbunden wird.

Bevorzugte Ausführungsformen der Erfindung sind dadurch gekennzeichnet, dass die Einsätze Lager bilden, an denen die Befüll- und Entnahmeeinrichtungen angebracht sind. Diese erstrecken sich vorteilhafterweise in axialer Richtung vom ersten Einsatz zu dem zweiten Einsatz hin. Dann können sie aus zwei weiteren Rohren bestehen, einem Befüllrohr und einem Entnahmerohr, die am ersten Einsatz einzeln gelagert und am zweiten Einsatz über die Verbindungseinrichtung gelagert sind. Das hat den Vorteil, dass die Montage der Befüll- und Entnahmeeinrichtungen zusammen mit dem und auf die gleiche Weise wie der Tankwärmetauscher erfolgen kann. Dazu sind vorteilhafterweise das Entnahmerohr über dem Befüllrohr und das Vorlaufrohr neben dem Rücklaufrohr so am ersten Einsatz und an der Verbindungseinrichtung angebracht oder gelagert, dass die vier Rohre zusammen, symmetrisch zur Mittelachse des Druckbehälters liegend angeordnet, ein Viereck aufspannen. Die Ecken dieses Vierecks liegen dazu innerhalb der Flächen der Öffnungen des Druckbehälters. Dann können alle vier Rohre, montiert am ersten Einsatz, in den Druckbehälter eingeschoben werden, entsprechend der obigen Beschreibung für die Tankwärmetauscherrohre.

Zur Aussteifung dieser Einbauten ist es weiter vorteilhaft, wenn die vier Rohre durch zwischen diese eingebrachte Querversteifungen auf Abstand voneinander gehalten werden. Eine qualitativ besonders hervorzuhebende Ausführungsform wird erreicht, wenn das Entnahmerohr, das Befüllrohr, das Vorlaufrohr und das Rücklaufrohr aus einem Leichtmetallwerkstoff nahtlos gezogen sind. Diese können dann mit dem ersten Einsatz und mit der Verbindungseinrichtung durch Schweißen besonders zuverlässig gasdicht verbunden werden, wenn letztgenannte Einrichtungen ebenfalls aus einem Leichtmetallwerkstoff bestehen. Insbesondere, wenn der Liner des Druckbehälters ebenfalls aus Leichtmetall besteht.

Eine solche Entnahmeeinrichtung ist sehr einfach aufgebaut, wenn das Entnahmerohr vorteilhafterweise eine Entnahmeöffnung besitzt durch die kryogenes Medium des Druckbehälterinhalts in das Entnahmerohr strömen kann und das kryogene Medium im weiteren Verlauf vom Entnahmerohr durch den ersten Einsatz strömen und so außerhalb des Druckbehälters entnommen werden kann.

Im Folgenden wird die Erfindung anhand von fünf Figuren weiter erläutert. Erfindungswesentlich können sämtliche näher beschriebenen Merkmale sein. Es zeigen:
Figur 1: einen Längsschnitt durch den Drucktank mit Tankwärmetauscher und Befüll- und Entnahmeeinrichtung,
Figur 2: eine vergrößerte räumliche Teilansicht des aufgeschnittenen Drucktanks im Bereich der Befüll- und Entnahmeeinrichtung,
Figur 3: eine vergrößerte räumliche Teilansicht des aufgeschnittenen Drucktanks im Bereich der Verbindungseinrichtung,
Figur 4: die Verbindungseinrichtung in vergrößerter räumlicher Ansicht und
Figur 5: eine Querversteifung in vergrößerter räumlicher Ansicht.

Ein Druckbehälter 1, der als Wasserstofftank zur kryogenen Speicherung von Wasserstoff in einem nicht gezeichneten Kraftfahrzeug zur Verwendung vorgesehen ist, wird aus einer Platine zum zylinderförmigen Mantel 2 gebogen, dessen Enden so angerollt werden, dass an jedem Ende eine abgerundete Stirnseite 3 mit einer zentrisch positionierten Öffnung 4, 5 entsteht. Durch Verschweißen werden die Öffnungen 4, 5 mit Einsätzen 6, 7 verschlossen, wobei ein erster Einsatz 6 mit einer Befüll- und Entnahmeeinrichtung 8 und einem Tankwärmetauscher 14 versehen ist, die am ersten Einsatz 6 befestigt, durch die Öffnung 4 in den Druckbehälter eingeschoben sind. Kontaktflächen 9, 10 an jeder Schweißstelle, zwischen dem Mantel 2 und den Einsätzen 6, 7, zum gasdichten Verbinden mittels Laser- oder Elektronenstrahlschweißen sind dazu flächig aneinander stoßend gestaltet. Das Elektronenstrahlschweißen wird im Hochvakuum durchgeführt. Entsprechende Einrichtungen, wie eine Vakuumkammer, sind nicht dargestellt.

Der Druckbehälter 1 wird außerhalb des Hochvakuums über zwei nicht gezeichnete Auflager fixiert, dazu wird ein erster, nicht dargestellter Reitstock an dem in seiner Öffnung 4 fertig positionierten ersten Einsatz 6 zugestellt. Mit diesem ersten Einsatz 6 aus Leichtmetall wurden bereits vorher vier nahtlos gezogene Rohre 16, 17, 18, 19 aus Leichtmetall, ein Vorlaufrohr 16 und ein Rücklaufrohr 17 des Tankwärmetauschers 14 und ein Entnahmerohr 18 und ein Befüllrohr 19 der Befüll- und Entnahmeeinrichtung 8 durch Schweißen gasdicht verbunden.

Der zweite Einsatz 7, der den Wärmetauscher 14 und die Befüll- und Entnahmeeinrichtung 8 verschieblich gelagert über eine Verbindungseinrichtung 20 trägt, wird zu seiner Öffnung 5 so positioniert, dass zwischen den Kontaktflächen 10 ein Spalt bestehen bleibt.

Darauf wird der so vorbereitete Druckbehälter 1 in die Vakuumkammer der Elektronenstrahlschweißanlage verbracht, diese wird evakuiert und darauffolgend wird ein zweiter, nicht dargestellter Reitstock am zweiten Einsatz 7 durch eine automatisierte hydraulische Zustellung fertig positioniert. Dabei wird der zweite Einsatz 7 in die Öffnung 5 eingeschoben, bis die Kontaktflächen 10 einander berühren. Der Druckbehälter 1 wird dadurch über die beiden Einsätze 6, 7 und deren Reitstöcke in Schweißposition gespannt, worauf die Einsätze 6, 7 mit dem Druckbehälter 1 nacheinander oder gleichzeitig verschweißt werden. Beim Zustellen des Reitstocks des zweiten Einsatzes 7 schiebt sich das Loslager der Verbindungseinrichtung 20 etwas mehr zusammen.

Durch das Positionieren des zweiten Einsatzes 7 in der Öffnung 5 so, dass zwischen den Kontaktflächen der Spalt bestehen bleibt, kann der Druckbehälter 1, nach dem Einfahren in die Vakuumkammer, in dieser sehr schnell evakuiert werden, da die Öffnung 5 zusammen mit dem Spalt sehr viel größer ist als die Öffnungsquerschnitte der Befüll- und Entnahmeeinrichtung 8 am ersten Einsatz 6, durch die sonst die Evakuierung des Druckbehälters 1 stattfinden müsste.

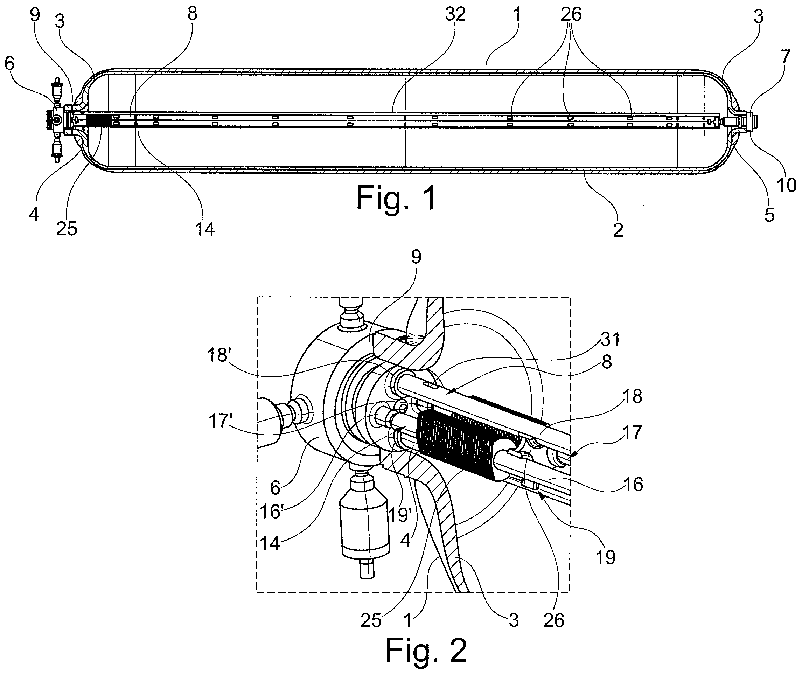

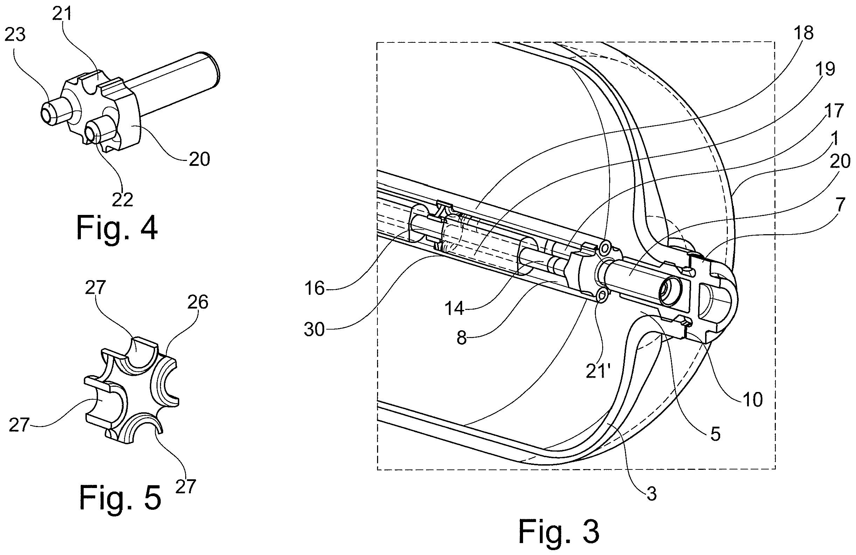

Der Tankwärmetauscher 14 und die Befüll- und Entnahmeeinrichtung 8 sind also über die Einsätze 6, 7 im Druckbehälter 1 gelagert. Am ersten Einsatz 6 (Fig. 2) befinden sich die Festlager, das heißt, die vier Rohre 16, 17, 18, 19 sind in vier Rohrstutzen 16', 17', 18', 19' des ersten Einsatzes 6 eingeführt und verschweißt. Das Loslager (Fig. 3) befindet sich am zweiten Einsatz 7, zwischen diesem und der in diesem eingesteckt, veschiebbar geführten Verbindungseinrichtung 20. Diese trägt wiederum die Rohre 16, 17, 18, 19. Das Vorlaufrohr 16 des Tankwärmetauschers 14 ist mit dessen Rücklaufrohr 17 über einen nicht sichtbaren Kanal in der Verbindungseinrichtung 20 verbunden, aufgesteckt auf und gasdicht verschweißt mit deren Ein- 22 und Auslass 23 (Fig. 4). Während das Entnahmerohr 18 und das Befüllrohr 19 der Befüll- und Entnahmeeinrichtung 8 an der Verbindungseinrichtung 20 in jeweils einer Lagerausnehmung 21, 21' nur gelagert sind. Das Vorlaufrohr 16 kann über eine nicht sichtbare Befüllöffnung im ersten Einsatz 6 von außerhalb des Druckbehälters 1 mit kryogenem Medium beschickt werden, wobei das kryogene Medium hier als Wärmetauschermittel im weiteren Verlauf durch das Vorlaufrohr 16 über den Kanal in der Verbindungseinrichtung 20 in das Rücklaufrohr 17 und von diesem wiederum über den ersten Einsatz durch eine in den Figuren nicht sichtbare Auslauföffnung aus dem Druckbehälter 1 heraus gelangt. Um den Wärmeaustausch zu begünstigen, sind die Rohre 16, 17 des Tankwärmetauschers 14 abschnittsweise außen mit Wärmetauschlamellen 25 versehen. Die Lager, über die die Befüll- und Entnahmeeinrichtung 8 am ersten Einsatz 6 angebracht ist, sind durch die Rohrstutzen 19', 18' gebildet. Am zweiten Einsatz 7 ist die Verbindungseinrichtung 20 verschieblich über ein Loslager gelagert, an der wiederum Auflager für die Befüll- und Entnahmeeinrichtung 8 als Lagerausnehmungen 21', 21 gebildet sind. Das Befüllrohr 19 kann über eine nicht sichtbare Befüllöffnung im ersten Einsatz 6 von außerhalb des Druckbehälters 1 mit kryogenem Medium beschickt werden, wobei das kryogene Medium im weiteren Verlauf durch das Befüllrohr 19 bis in die Nähe der Verbindungseinrichtung 20 und von dort über eine zweite Austrittsöffnung 30 im Befüllrohr 19 in den Druckbehälter 1 fließt.

Das Entnahmerohr 18 besitzt eine Entnahmeöffnung 31 durch die kryogenes Medium des Druckbehälterinhalts in das Entnahmerohr 18 strömen kann und das kryogene Medium im weiteren Verlauf vom Entnahmerohr 18 durch den ersten Einsatz 6 strömt und so außerhalb des Druckbehälters 1 entnommen werden kann.

Befüll- und Entnahmeeinrichtung 8 und Tankwärmetauscher 14 sind so als Einsatz für den Druckbehälter 1 konzipiert, wobei der Druckbehältereinsatz durch die Öffnung 4 des Druckbehälters 1 in diesen eingeführt werden kann. Dabei sind das Entnahmerohr 18 über dem Befüllrohr 19 und das Vorlaufrohr 16 neben dem Rücklaufrohr 17 so am ersten Einsatz 6 und an der Verbindungseinrichtung 20 angebracht, dass die vier Rohre 16, 17, 18, 19 zusammen, symmetrisch zur Mittelachse 32 des Druckbehälters 1 liegend angeordnet, ein Viereck aufspannen.

Zwischen die Rohre 16, 17, 18, 19 sind Querversteifungen 26 (Fig. 5), mit jeweils vier Rohrauflagereinrichtungen 27, eingebracht, die die Rohre 16, 17, 18, 19 auf Abstand voneinander halten und zu deren sicheren, schwingungsfreien Lagerung beitragen.

## Patentansprüche

1. Druckbehälter (1) für ein kryogen gespeichertes Medium, bestehend aus einem zylinderförmigen Mantel (2) und aus an dessen Enden angerollten, abgerundeten Stirnseiten (3) mit zentrisch positionierten Öffnungen (4, 5), die mit eingeschweißten Einsätzen (6, 7) verschlossen sind, wobei wenigstens ein erster Einsatz (6) wenigstens mit Befüll- und Entnahmeeinrichtungen (8) versehen ist und die Einsätze (6, 7) Lager bilden, an denen wenigstens ein Tankwärmetauscher (14) angebracht ist, der aus zwei Rohren (16, 17) besteht, einem Vorlaufrohr (16) und einem Rücklaufrohr (17), wobei die Befüll- und Entnahmeeinrichtungen (8) aus zwei weiteren Rohren (18, 19) bestehen, einem Befüllrohr (19) und einem Entnahmerohr (18), die am ersten Einsatz (6) einzeln gelagert und am zweiten Einsatz (7) über eine Verbindungseinrichtung (20) gelagert sind, wobei das Befüllrohr (19) über eine Befüllöffnung im ersten Einsatz (6) von außerhalb des Druckbehälters (1) mit kryogenem Medium beschickt wird und das kryogene Medium im weiteren Verlauf durch das Befüllrohr (19) und von dort über eine zweite Austrittsöffnung (30) im Befüllrohr (19) in den Druckbehälter (1) fließt.

2. Druckbehälter (1) nach Anspruch 1, **dadurch gekennzeichnet, dass** der Tankwärmetauscher (14) sich in axialer Richtung vom ersten Einsatz (6) zu einem zweiten Einsatz (7) hin erstreckt.

3. Druckbehälter (1) nach Anspruch 1 oder 2, **dadurch gekennzeichnet, dass** die zwei Rohre (16, 17) des Tankwärmetauschers (14) am ersten Einsatz (6) einzeln angebracht und am zweiten Einsatz (7) zusammen über die Verbindungseinrichtung (20) gelagert sind, wobei das Vorlaufrohr (16) über eine Befüllöffnung im ersten Einsatz (6) von außerhalb des Druckbehälters (1) mit kryogenem Medium beschickt wird und das kryogene Medium im weiteren Verlauf durch das Vorlaufrohr (16) über die Verbindungseinrichtung (20) in das Rücklaufrohr (17) und von diesem über eine erste Austrittsöffnung in den Druckbehälter (1) fließt oder durch den ersten Einsatz (6) hindurch, über eine Auslauföffnung in diesem, aus dem Druckbehälter (1) heraus geführt wird.

4. Druckbehälter (1) nach Anspruch 3, **dadurch gekennzeichnet, dass** die erste Austrittsöffnung im Rücklaufrohr (17), in der Nähe des ersten Einsatzes (6) angebracht ist.

5. Druckbehälter (1) nach Anspruch 3, **dadurch gekennzeichnet, dass** die erste Austrittsöffnung im ersten Einsatz (6) angebracht ist.

6. Druckbehälter (1) nach einem der Ansprüche 3 bis 5, **dadurch gekennzeichnet, dass** die Rohre (16, 17) des Tankwärmetauschers (14) wenigstens abschnittsweise außen mit Wärmetauschlamellen (25) versehen sind.

7. Druckbehälter (1) nach einem der Ansprüche 1 bis 6, **dadurch gekennzeichnet, dass** die Einsätze (6, 7) Lager (18', 19', 21, 22) bilden, an denen die Befüll- und Entnahmeeinrichtungen (8) angebracht sind.

8. Druckbehälter (1) nach einem der Ansprüche 1 bis 7, **dadurch gekennzeichnet, dass** sich die Befüll- und Entnahmeeinrichtungen (8) in axialer Richtung vom ersten Einsatz (6) zu dem zweiten Einsatz (7) hin erstrecken.

9. Druckbehälter (1) nach einem der Ansprüche 1 bis 8, **dadurch gekennzeichnet, dass** das Entnahmerohr (18) eine Entnahmeöffnung (31) besitzt durch die kryogenes Medium des Druckbehälterinhalts in das Entnahmerohr (18) strömen kann und das kryogene Medium im weiteren Verlauf vom Entnahmerohr (18) durch den ersten Einsatz (6) strömen und so außerhalb des Druckbehälters (1) entnommen werden kann.

10. Druckbehälter (1) nach einem der Ansprüche 1 bis 9, **dadurch gekennzeichnet, dass** das Entnahmerohr (18) über dem Befüllrohr (19) und das Vorlaufrohr (16) neben dem Rücklaufrohr (17) so am ersten Einsatz (6) und an der Verbindungseinrichtung (20) angebracht oder gelagert sind, dass die vier Rohre (16, 17, 18, 19) zusammen, symmetrisch zur Mittelachse (32) des Druckbehälters (1) liegend angeordnet, ein Viereck aufspannen.

11. Druckbehälter (1) nach Anspruch 10, **dadurch gekennzeichnet, dass** die vier Rohre (16, 17, 18, 19) durch zwischen diese eingebrachte Querversteifungen (26) auf Abstand voneinander gehalten werden.

12. Druckbehälter (1) nach einem der Ansprüche 1 bis 11, **dadurch gekennzeichnet, dass** das Entnahmerohr (18), das Befüllrohr (19), das Vorlaufrohr (16) und das Rücklaufrohr (17) aus einem Leichtmetallwerkstoff nahtlos gezogen sind.

13. Druckbehälter (1) nach einem der Ansprüche 1 bis 12, **dadurch gekennzeichnet, dass** das Entnahmerohr (18), das Befüllrohr (19), das Vorlaufrohr (16) und das Rücklaufrohr (17) mit dem ersten Einsatz (6) und mit der Verbindungseinrichtung (20) durch Schweißen gasdicht verbunden sind.

## Claims

1. A pressure vessel (1) for a cryogenically stored medium, comprising a cylindrical jacket (2) and rounded-off end faces (3) which are rolled onto the ends of said cylindrical jacket and which have centrally positioned openings (4, 5) which are closed by welded-in inserts (6, 7), wherein at least one first insert (6) is provided at least with filling and removal devices (8), and the inserts (6, 7) form bearings, to which at least one in-tank heat exchanger (14) is fitted, which comprises two pipes (16, 17), a feed pipe (16) and a return pipe (17), wherein the filling and removal devices (8) comprise two further pipes (18, 19), a filling pipe (19) and a removal pipe (18), which are fitted individually to the first insert (6) and are fitted to the second insert (7) via a connecting device (20), wherein the filling pipe (19) can be charged with cryogenic medium from outside the pressure vessel (1) via a filling opening in the first insert (6), and the cryogenic medium flows on further through the filling pipe (19) and from there via a second outlet opening (30) in the filling pipe (19) into the pressure vessel (1).

2. A pressure vessel according to claim 1, **characterised in that** the in-tank heat exchanger (14) extends in the axial direction from the first insert (6) to a second insert (7).

3. A pressure vessel (1) according to claim 1 or 2, **characterised in that** the two pipes (16, 17) of the in-tank heat exchanger (14) are fitted individually to the first insert (6) and fitted together to the second insert (7) via the connecting device (20), wherein the feed pipe (16) can be charged with cryogenic medium from outside the pressure vessel (1) via a filling opening in the first insert (6), and the cryogenic medium flows on further through the feed pipe (16) via the connecting device (20) into the return pipe (17), and from the return pipe into the pressure vessel (1) via a first outlet opening, or is led out of the pressure vessel (1) through the first insert (6) via an outlet opening therein.

4. A pressure vessel (1) according to claim 3, **characterised in that** the first outlet opening is fitted in the return pipe (17) in the vicinity of the first insert (6).

5. A pressure vessel (1) according to claim 3, **characterised in that** the first outlet opening is fitted in the first insert (6).

6. A pressure vessel (1) according to any one of claims 3 to 5, **characterised in that** heat exchange fins (25) are provided on at least a portion of the outside of the pipes (16, 17) of the in-tank heat exchanger (14).

7. A pressure vessel (1) according to any one of claims 1 to 6, **characterised in that** the inserts (6, 7) form bearings (18', 19', 21, 22), to which the filling and removal devices (8) are fitted.

8. A pressure vessel (1) according to any one of claims 1 to 7, **characterised in that** the filling and removal devices (8) extend in the axial direction from the first insert (6) to the second insert (7).

9. A pressure vessel (1) according to any one of claims 1 to 8, **characterised in that** the removal pipe (18) has a removal opening (31) through which cryogenic medium of the pressure vessel content can flow into the removal pipe (18), and the cryogenic medium can flow on further from the removal pipe (18) through the first insert (6), and thus can be removed outside the pressure vessel (1).

10. A pressure vessel (1) according to any one of claims 1 to 9, **characterised in that** the removal pipe (18) is fitted or mounted above the filling pipe (19) and the feed pipe (16) is fitted or mounted beside the return pipe (17) on the first insert (6) and on the connecting device (20) such that the four pipes (16, 17, 18, 19) together span a rectangle arranged horizontally and symmetrically with respect to the centre axis (32) of the pressure vessel (1).

11. A pressure vessel according to claim 10, **characterised in that** the four pipes (16, 17, 18, 19) are kept at a distance from one another by transverse stiffeners (26) introduced between them.

12. A pressure vessel (1) according to any one of claims 1 to 11, **characterised in that** the removal pipe (18), the filling pipe (19), the feed pipe (16) and the return pipe (17) are drawn seamlessly from a lightweight metal material.

13. A pressure vessel (1) according to any one of claims 1 to 12, **characterised in that** the removal pipe (18), the filling pipe (19), the feed pipe (16) and the return pipe (17) are connected in a gas-tight manner to the first insert (6) and to the connecting device (20) by welding.

## Revendications

1. Réservoir sous pression (1) destiné à un fluide stocké dans des conditions constitué d'une enveloppe cylindrique (2) et de faces frontales bombées (3) roulées à leurs extrémités ayant des ouvertures centrales (4, 5) qui sont fermées par des inserts soudés (6, 7), au moins un premier insert (6) étant équipé au moins de dispositifs de remplissage et de soutirage (8) et les inserts (6, 7) formant des paliers sur lesquels est installé au moins un échangeur de chaleur de cuve (14) qui est constitué de deux tubes (16, 17), à savoir un tube d'amenée (16) et un tube de retour (17), les dispositifs de remplissage et de soutirage (8) étant constitués de deux autres tubes (18, 19), à savoir un tube de remplissage (19) et un tube de soutirage (18) qui sont installés individuellement sur le premier insert (6) et sont montés sur le second insert (7) par l'intermédiaire d'un dispositif de liaison (20), le tube de remplissage (19) étant alimenté en fluide cryogénique à partir de l'extérieur du réservoir sous pression (1) par l'intermédiaire d'une ouverture de remplissage située dans le premier insert (6) et le fluide cryogénique s'écoulant ensuite au travers du tube de remplissage (19) et à partir de ce tube, par l'intermédiaire d'une seconde ouverture de sortie (30) située dans le tube de remplissage (19) dans le réservoir sous pression (1).

2. Réservoir sous pression (1) conforme à la revendication 1,
**caractérisé en ce que**
l'échangeur de chaleur de cuve (14) s'étend en direction axiale du premier insert (6) vers le second insert (7).

3. Réservoir sous pression (1) conforme à la revendication 1 ou 2,
**caractérisé en ce que**
les deux tubes (16, 17) de l'échangeur de chaleur de cuve (14) sont installés individuellement sur le premier insert (6) et sont montés ensemble sur le second insert (7) par l'intermédiaire du dispositif de liaison (20), le tube d'amenée (16) étant alimenté en fluide cryogénique à partir de l'extérieur du réservoir sous pression (1), par l'intermédiaire d'une ouverture de remplissage située dans le premier insert (6) et, le fluide cryogénique s'écoulant ensuite au travers du tube d'amenée (16) par le dispositif de liaison (20) dans le tube de retour (17) et à partir de ce tube par une première ouverture de sortie dans le réservoir sous pression (1) ou étant extrait du réservoir sous pression (1) au travers du premier insert (6) par une ouverture de sortie située dans celui-ci.

4. Réservoir sous pression (1) conforme à la revendication 3,
**caractérisé en ce que**
la première ouverture de sortie est située dans le tube de retour (17) à proximité du premier insert (6).

5. Réservoir sous pression (1) conforme à la revendication 3,
**caractérisé en ce que**
la première ouverture de sortie est située dans le premier insert (6).

6. Réservoir sous pression (1) conforme à l'une des revendications 3 à 5,
**caractérisé en ce que**
les tubes (16,17) de l'échangeur de chaleur de cuve (14) sont équipés extérieurement au moins par segment de lamelles d'échange de chaleur (25).

7. Réservoir sous pression (1) conforme à l'une des revendications 1 à 6,
**caractérisé en ce que**
les inserts (6, 7) forment des paliers (18', 19', 21, 22) sur lesquels sont installés les dispositifs de remplissage et de soutirage (8).

8. Réservoir sous pression (1) selon l'une des revendications 1 à 7,
**caractérisé en ce que**
les dispositifs de remplissage et de soutirage (8) s'étendent en direction axiale du premier insert (6) au second insert (7).

9. Réservoir sous pression (1) conforme à des revendications 1 à 8,
**caractérisé en ce que**
le tube de soutirage (18) comporte une couverture de soutirage (31) au travers de laquelle du fluide cryogénique situé à l'intérieur du réservoir sous pression peut s'écouler dans le tube de soutirage (18) et, le fluide cryogénique peut ensuite s'écouler du tube de soutirage (18) au travers du premier insert (6) et être ainsi prélevé à l'extérieur du réservoir sous pression (1).

10. Réservoir sous pression (1) conforme à l'une des revendications 1 à 9,
**caractérisé en ce que**
le tube de soutirage (18) est installé ou monté au dessus du tube de remplissage (19) et le tube d'amenée (16), est installé ou monté à proximité du tube de retour (17), sur le premier insert (6) et sur le dispositif de liaison (20) de sorte que les quatre tubes (16, 17, 18, 19) enserrent ensemble un carré s'étendant symétriquement à l'axe médian (32) du réservoir sous pression (1).

11. Réservoir sous pression (1) conforme à la revendication 10,
**caractérisé en ce que**
les quatre tubes (16, 17, 18, 19) sont maintenus à distance les uns des autres par des éléments de renfort transversaux (26) installés entre eux.

12. Réservoir sous pression (1) conforme à l'une des revendications 1 à 11,
**caractérisé en ce que**
le tube de soutirage (18) le tube de remplissage (19) le tube d'amenée (16) et le tube de retour (17) sont réalisés sans jointure en un métal léger.

13. Réservoir sous pression (1) conforme à l'une des revendications 1 à 12,
**caractérisé en ce que**
le tube de soutirage (18), le tube de remplissage (19), le tube d'amenée (16) et le tube de retour (17) sont reliés de façon étanche aux gaz par soudure avec le premier insert (6) et avec le dispositif de liaison (20).
